# EUROPÄISCHE PATENTSCHRIFT

(11) **EP 1 735 527 B1**
(45) Veröffentlichungstag und Bekanntmachung des Hinweises auf die Patenterteilung: **24.09.2014**
(21) Anmeldenummer: 05716131.7
(22) Anmeldetag: 17.03.2005
(51) Int. Cl.: F01P 5/06, B60K 11/04

(54) **KÜHLSYSTEM**
COOLING SYSTEM
SYSTEME DE REFROIDISSEMENT

(30) Priorität: 08.04.2004 DE 102004018036
(43) Veröffentlichungstag der Anmeldung: 27.12.2006
(73) Patentinhaber: Behr GmbH & Co. KG, 70469 Stuttgart (DE)
(72) Erfinder: PANTOW, Eberhard, 71696 Möglingen (DE)
(74) Vertreter: Grauel, Andreas
(86) Internationale Anmeldenummer: PCT/EP2005/002816
(87) Internationale Veröffentlichungsnummer: WO 2005/100760

(56) Entgegenhaltungen:
- WO-A-98/37319
- US-A- 5 427 502
- US-A- 5 970 925
- US-A1- 2003 183 446
- US-B1- 6 668 956

## Beschreibung

Die Erfindung betrifft ein Kühlsystem für ein Kraftfahrzeug, mit einem Kühler, der von Kühlmittel durchflossen wird, das insbesondere zur Kühlung eines Motors dient, und der von einer Kühlluftströmung durchströmt wird, die, in Abhängigkeit von der Geschwindigkeit des Kraftfahrzeugs, von einem Lüfter beeinflusst wird, der zwischen dem Kühler und dem Motor angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube abgedeckt ist.

In derartigen Kühlsystemen hat der Lüfter, der auch als Ventilator bezeichnet wird, die Aufgabe, den Kühler und den Motorraum mit einer ausreichenden Kühlluftmenge zu versorgen, wenn der Fahrtwind nicht ausreicht, zum Beispiel bei langsamer Fahrt oder bei Stillstand des Fahrzeugs. Das erforderliche Fördervolumen des Lüfters ist, je nach Betriebszustand des Fahrzeugs, sehr unterschiedlich. Während einer Langsamfahrt wird der für die Förderung der Kühlluftströmung nötige Druckaufbau von dem Lüfter bereitgestellt. Daher wird dieser Betriebszustand auch als Lüfterbetriebszustand, kurz Lüfterbetrieb, bezeichnet. Bei einer Schnellfahrt hat der Fahrtwind eine größere Wirkung als der Lüfter. Der Lüfter führt bei einer Schnellfahrt zu einem unerwünschten Druckverlust. Dieser Betriebszustand wird auch als Staudruckbetriebszustand, kurz Staudruckbetrieb, bezeichnet. Der im Staudruckbetrieb auftretende Druckverlust ist insbesondere dann problematisch, wenn die Projektion der Lüfterfläche auf die Kühlerfläche deutlich kleiner als die Kühlerfläche selbst ist.

Aufgabe der Erfindung ist es, ein aerodynamisch verbessertes Kühlsystem für ein Kraftfahrzeug, mit einem Kühler, der von Kühlmittel durchflossen wird, das insbesondere zur Kühlung eines Motors dient, und der von einer Kühlluftströmung durchströmt wird, die, in Abhängigkeit von der Geschwindigkeit des Kraftfahrzeugs, von einem Lüfter beeinflusst wird, der zwischen dem Kühler und dem Motor angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube abgedeckt ist, zu schaffen, das sowohl für eine Staudruck dominierte Schnellfahrt als auch für den Lüfterbetrieb bei Langsamfahrt geeignet ist.

Die Aufgabe ist bei einem Kühlsystem für ein Kraftfahrzeug, mit einem Kühler, der von Kühlmittel durchflossen wird, das insbesondere zur Kühlung eines Motors dient, und der von einer Kühlluftströmung durchströmt wird, die, in Abhängigkeit von der Geschwindigkeit des Kraftfahrzeugs, von einem Lüfter beeinflusst wird, der zwischen dem Kühler und dem Motor angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube abgedeckt ist, dadurch gelöst, dass die Lüfterhaube an einer Seite, insbesondere an mindestens einer Seite, des Differenzbereich mit mindestens einer Öffnung versehen ist, wobei sich die Öffnung, im Schnitt betrachtet, nach außen zum Motor hin erweitert. Dadurch wird die Lüfterhaube in den Bereichen, die nicht durch den Lüfter und einen vorzugsweise am Umfang des Lüfters vorgesehenen Lüfterzargenring abgedeckt sind, aerodynamisch so gestaltet, dass der Druckabfall der Kühlluft, die von vorne durch den Kühler strömt, wesentlich niedriger ist als der Druckabfall der Kühlluft, die bei einem niedrigen Staudruck vom Lüfter in Fahrtrichtung durch die Lüfterhaube nach vorne strömt. Durch eine Lüfterhaubenkontur, die der gewünschten Motorraumdurchströmung im Staudruckbetrieb folgt, wird diese Strömung nicht behindert. Im Lüfterbetrieb muss die Strömung einen längeren Weg und mehr Umlenkungen nehmen, um rezirkulieren zu können. Dadurch erhöht sich der Druckverlust auf diesem Strömungsweg erheblich, so dass der Anteil an rezirkulierter Luft reduziert wird. Die Erweiterung des Strömungswegs hat sich im Rahmen der vorliegenden Erfindung als besonders vorteilhaft erwiesen.

Die oben angegebene Aufgabe ist bei einem Kühlsystem für ein Kraftfahrzeug, mit einem Kühler, der von Kühlmittel durchflossen wird, das insbesondere zur Kühlung eines Motors dient, und der von einer Kühlluftströmung durchströmt wird, die, in Abhängigkeit von der Geschwindigkeit des Kraftfahrzeugs, von einem Lüfter beeinflusst wird, der zwischen dem Kühler und dem Motor angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube abgedeckt ist, auch dadurch gelöst, dass die Lüfterhaube in dem Differenzbereich zum Motor hin eine Öffnung, insbesondere mindestens eine Öffnung, aufweist, in der mindestens eine Leitlamelle, insbesondere mehrere Leitlamellen, angeordnet ist beziehungsweise sind, wobei mehrere Leitlamellen in Form eines Leitgitters im Wesentlichen parallel zueinander angeordnet sind und wobei die Leitlamellen, in der Draufsicht auf den Kühler betrachtet, im Wesentlichen konzentrisch zu der Lüfterachse angeordnet sind. Dadurch wird die Lüfterhaube in den Bereichen, die nicht durch den Lüfter und einen vorzugsweise am Umfang des Lüfters vorgesehenen Lüfterzargenring abgedeckt sind, aerodynamisch so gestaltet, dass der Druckabfall der Kühlluft, die von vorne durch den Kühler strömt, wesentlich niedriger ist als der Druckabfall der Kühlluft, die bei einem niedrigen Staudruck vom Lüfter in Fahrtrichtung durch die Lüfterhaube nach vorne strömt. Die Leitlamelle stellt durch ihre Gestalt und aufgrund der verschiedenen Strömungsrichtungen und -winkel für die in Abhängigkeit von der Fahrzeuggeschwindigkeit verschiedenen Strömungsformen unterschiedliche Widerstände dar. Das Leitgitter ist vorzugsweise so ausgerichtet, dass die Durchströmung im Staudruckbetrieb begünstigt und die Rezirkulation behindert wird. Die Anordnung der Leitlamellen hat sich im Rahmen der vorliegenden Erfindung als besonders vorteilhaft erwiesen.

Ein weiteres bevorzugtes Ausführungsbeispiel des Kühlsystems ist dadurch gekennzeichnet, dass die Leitlamellen in einem Winkel von 30° bis 80°, insbesondere von etwa 45°, zur Kühlluftströmung geneigt angeordnet sind. Diese Anordnung der Leitlamellen zur Hauptrichtung der Kühlluftströmung hat sich als besonders vorteilhaft erwiesen.

Ein weiteres bevorzugtes Ausführungsbeispiel des Kühlsystems ist dadurch gekennzeichnet, dass die Leitlamellen, im Schnitt betrachtet, gekrümmt ausgebildet sind. Dadurch kann eine bessere Anpassung an die Strömungsverhältnisse erreicht werden.

Ein weiteres bevorzugtes Ausführungsbeispiel des Kühlsystems ist dadurch gekennzeichnet, dass die Leitlamellen zum Lüfter hin konvex gekrümmt sind. Vorzugsweise sind die Leitfamellen gewölbt ausgebildet.

Ein weiteres bevorzugtes Ausführungsbeispiel des Kühlsystems ist dadurch gekennzeichnet, dass die Leitlamellen profiliert ausgebildet sind. Vorzugsweise sind die Leitlamellen in dem Leitgitter gleichmäßig verteilt angeordnet. Die Leitlamellen können aber auch ungleichmäßig verteilt angeordnet sein.

Ein weiteres bevorzugtes Ausführungsbeispiel des Kühlsystems ist dadurch gekennzeichnet, dass die Lüfterhaube einstückig aus Kunststoff gebildet ist. Um hohe Kosten zu vermeiden, ist die Lüfterhaube vorzugsweise als Spritzgussteil ausgebildet, wobei die einzelnen Gitterelemente so gestaltet sind, dass sie sich in der Richtung senkrecht zum Kühler nicht überlappen und somit einem einfachen Spritzgusswerkzeug entformt werden können.

Im Rahmen der vorliegenden Erfindung wurden verschiedene Ansätze, wie zum Beispiel die Verwendung von so genannten Teilzargen oder von Vollzargen, zur Lösung der vorab angegebenen Aufgabe betrachtet. Diese Ansätze werden in der folgenden ausführlichen Beschreibung der Figuren näher erläutert. Die erfindungsgemäße Lösung liefert allgemein den Vorteil, dass auf bewegliche Teile, wie Staudruckklappen, an der Lüfterhaube verzichtet werden kann. Trotzdem wird sichergestellt, dass die gesamte Kühlerfläche im Lüfterbetrieb durchströmt wird. Eine unerwünschte Rückströmung kann weitestgehend unterbunden werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein Kühlsystem mit so genannten Teitzargen im Lüfterbetrieb;
- Figur 2: das Kühlsystem aus Figur 1 im Staudruckbetrieb;
- Figur 3: ein Kühlsystem mit so genannten Vollzargen im Lüfterbetrieb;
- Figur 4: das Kühlsystem aus Figur 3 im Staudruckbetrieb,
- Figur 5: ein erfindungsgemäßes Kühlsystem mit einer seitlichen Öffnung im Lüfterbetrieb;
- Figur 6: das Kühlsystem aus Figur 5 im Staudruckbetrieb;
- Figur 7: ein erfindungsgemäßes Kühlsystem mit einer Leitlamelle im Lüfterbetrieb;
- Figur 8: das Kühlsystem aus Figur 7 im Staudruckbetrieb;
- Figur 9: einen Ausschnitt eines erfindungsgemäßen Kühlsystems mit einem Leitgitter gemäß einer ersten Ausführungsform und
- Figur 10: einen ähnlichen Ausschnitt wie Figur 9 mit einem Leitgitter gemäß einer zweiten Ausführungsform.

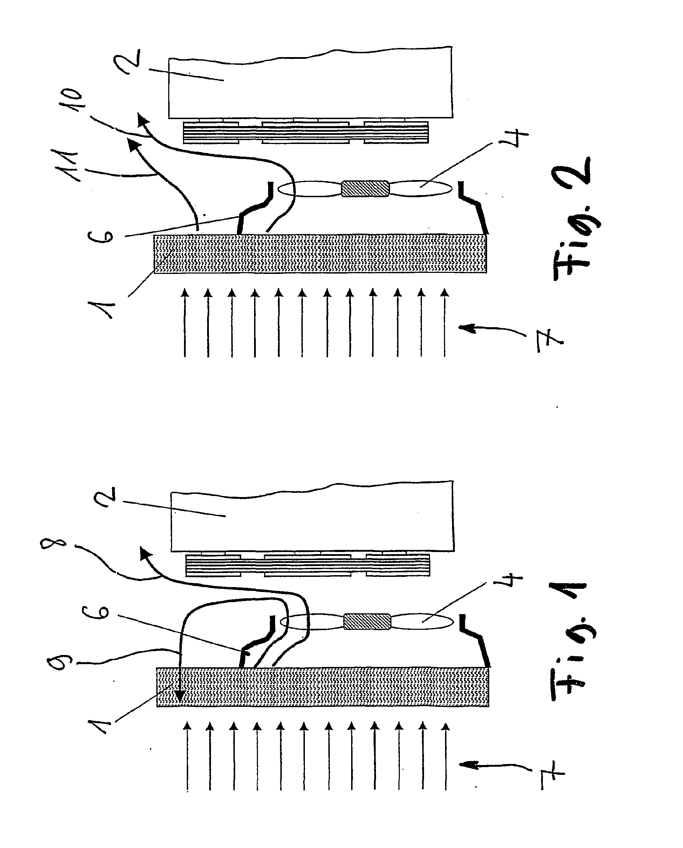

In Figur 1 ist ein Kühlsystem mit so genannten Teilzargen schematisch dargestellt. Das Kühlsystem umfasst einen Kühler 1, der von einem Kühlmittel durchflossen wird, das über (nicht dargestellte) Kühlmittelleitungen zu einem Motor 2 geleitet und dort zur Kühlung des Motors 2 verwendet wird. Zwischen dem Kühler 1 und dem Motor 2 ist ein Lüfter 4 angeordnet, der, insbesondere bei Stillstand des Fahrzeugs oder bei einer Langsamfahrt, dazu dient, den Motorraum mit einer ausreichenden Kühlluftmenge zu durchströmen. Der in Figur 1 dargestellte Zustand wird daher auch als Lüfterbetrieb bezeichnet. Der Lüfter ist von einer geschlossenen Lüfterhaube 6 umgeben.

Eine, in Fahrtrichtung des Kraftfahrzeugs betrachtete, von vorne auf den Kühler 1 treffende Kühlluftströmung ist insgesamt mit 7 bezeichnet. Da nur der Bereich des Lüfters 4 durch die geschlossene Lüfterhaube 6 abgedeckt ist, fördert der Lüfter 4 nur in einem begrenzten Bereich. Durch den nicht von der Lüfterhaube 6 abgedeckten Bereich des Kühlers 1 kann die Kühlluftströmung 7 ungehindert durchströmten. Durch einen Pfeil 8 ist der gewünschte Strömungsweg durch die Lüfterhaube 6 und den Lüfter 4 angedeutet. Durch einen Pfeil 9 ist angedeutet, dass, insbesondere bei Verwendung eines starken Lüfters, eine Rezirkulation der Kühlluft durch den Kühler 1 stattfinden kann. Eine solche Rezirkulation führt zu erheblichen Verlusten der Kühlleistung bei Langsamfahrt im Lüfterbetrieb. Darüber hinaus wird im Lüfterbetrieb nur ein Teil des Kühlers 1 genutzt, wodurch sich die Kühlleistung und auch die Klimaleistung verschlechtern.

In dem in Figur 2 dargestellten Staudruckbetrieb, also bei Schnellfahrt, kann die Luft in dem nicht durch die Lüfterhaube 6 abgedeckten Bereich fast ungehindert durch den Kühler 1 strömen, wie durch einen Pfeil 11 angedeutet ist Die Drosselwirkung beschränkt sich somit auf den vom Lüfter abgedeckten Bereich, wie durch den Pfeil 10 angedeutet ist.

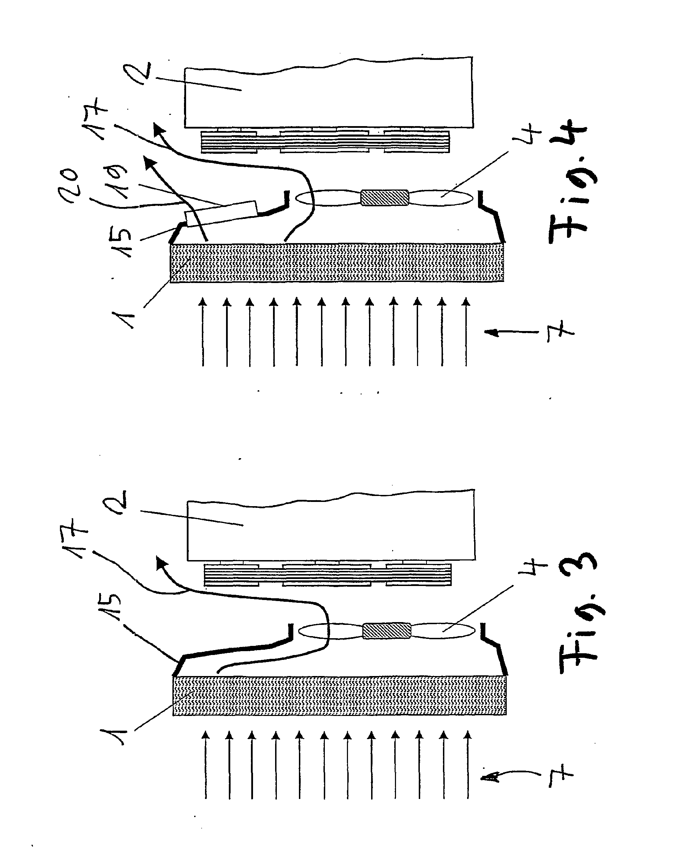

In den Figuren 3 bis 8 werden für den Kühler 1, den Motor 2, den Lüfter 4 und die Kühlluftströmung 7 die gleichen Bezugszeichen wie in den Figuren 1 bis 2 verwendet. Um Wiederholungen zu vermeiden, wird auf die vorangegangene Beschreibung der Figuren 1 bis 2 verwiesen. Im Folgenden wird nur auf die Unterschiede zwischen den einzelnen Ausführungsbeispielen eingegangen.

Bei den in den Figuren 3 und 4 dargestellten Vollzargen ist die gesamte Fläche des Kühlers 1 von einer Lüfterhaube 6 abgedeckt. Durch einen Pfeil 17 ist angedeutet, dass die gesamte Kühlluftströmung 7 in dem in Figur 3 dargestellten Lüfterbetrieb durch die Lüfterhaube 15 und durch den Lüfter 4 geleitet wird.

In Figur 4 sieht man, dass im Staudruckbetrieb Staudruckklappen 19 im Lüfterbetrieb geschlossene Öffnungen für einen Teil der Kühlluftströmung 7 freigeben, wie durch einen Pfeil 19 angedeutet ist. Die Staudruckklappen 19 haben die Funktion eines Rückschlagventils, das heißt, sie öffnen sich, wen n der Fahrtwind den Druckaufbau des Lüfters 4 überwiegt, und schließen sich, wenn der Lüfter 4 hinter der Lüfterhaube 15 mehr Druck aufbaut als der Fahrtwind. Die Staudruckklappen 19 stellen einen erheblichen Kostenfaktor dar. Die für den Staudruckbetrieb frei schaltbare Fläche ist außerdem konstruktiv oder durch die Herstellkosten begrenzt.

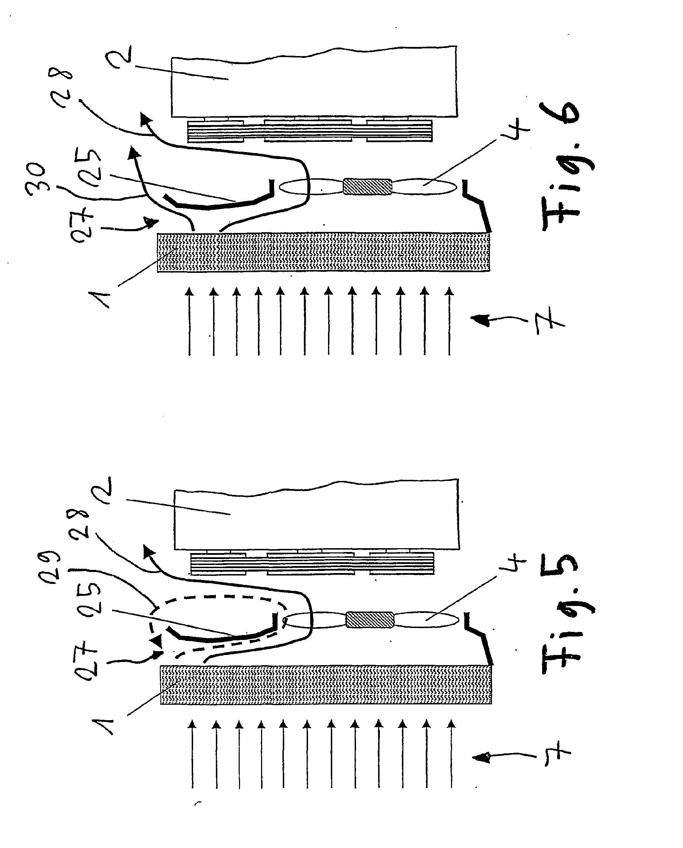

In den Figuren 5 und 6 ist die komplette, dem Motor 2 zugewandte Fläche des Kühlers 1, wie bei dem in den Figuren 3 und 4 dargestellten Kühlsystem, abgesehen von dem Lüfter 4, von einer Lüfterhaube 25 abgedeckt. Allerdings ist seitlich eine Öffnung 27 ausgespart, durch die Luft sowohl ein- als auch austreten kann. Die Öffnung 27 erweitert sich nach außen. Vorzugsweise erstreckt sich die Öffnung 27 über eine ganze Seite des im Wesentlichen rechteckförmigen Kühlers 1. Durch einen Pfeil 28 ist angedeutet, dass im Lüfterbetrieb nahezu die gesamt Kühlluftströmung 7 entlang dem gewünschten Strömungsweg verläuft. Durch einen gestrichelten Pfeil 29 ist angedeutet, dass ein kleiner Teil der Kühlluftströmung 7 rezirkulieren kann, indem er erst durch den Kühler 1 und den Lüfter 4 und dann über die Öffnung 27 wieder in und durch den Kühler 1 strömen kann. Allerdings ist der Strömungsweg 29 deutlich länger als bei herkömmlichen Kühlsystemen. In Figur 6 ist durch einen Pfeil 30 angedeutet, dass ein Teil der Kühlluftströmung 7 durch den Kühler 1 und dann durch die Öffnung 27 strömt.

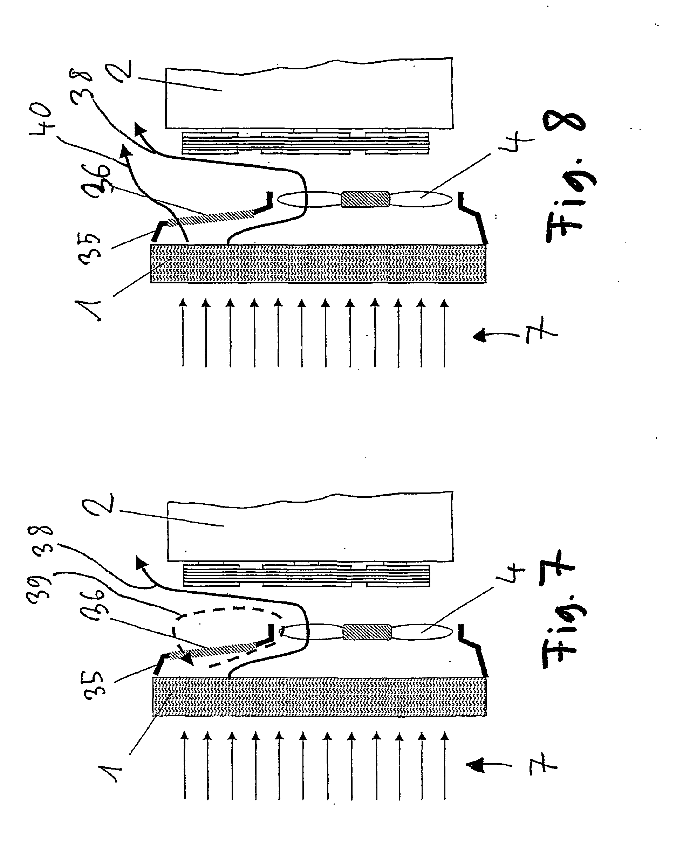

In den Figuren 7 und 8 ist die komplette, dem Motor 2 zugewandte Fläche des Kühlers, abgesehen von dem Lüfter 4, von einer Lüfterhaube 35 abgedeckt. In der Lüfterhaube 35 sind in dem Bereich, in dem der Lüfter 4 nicht angeordnet ist, Öffnungen oder eine große Öffnung mit feststehenden Leitlamellen 36 vorgesehen. Durch einen Pfeil 38 ist angedeutet, dass der Hauptteil der Kühlluftströmung 7 durch den Lüfter hindurch und an dem Motor 2 vorbei den gewünschten Strömungsweg einschlägt. Durch einen gestrichelten Pfeil 39 ist in Figur 7 angedeutet, dass ein geringer Teil der Kühlluftströmung 7 auch rezirkulieren kann. Allerdings ist der Rezirkulationsströmungsweg 39 länger und mit mehr Umlenkungen versehen als bei herkömmlichen Kühlsystemen. Dadurch erhöht sich der Druckverlust auf diesem Luftpfad erheblich. In Figur 8 ist durch einen Pfeil 40 angedeutet, dass ein Teil der Kühlluftströmung 7 durch die Öffnung mit der Leitlamelle 36 hindurch den gewünschten Strömungsweg am Motor 2 vorbei einschlägt.

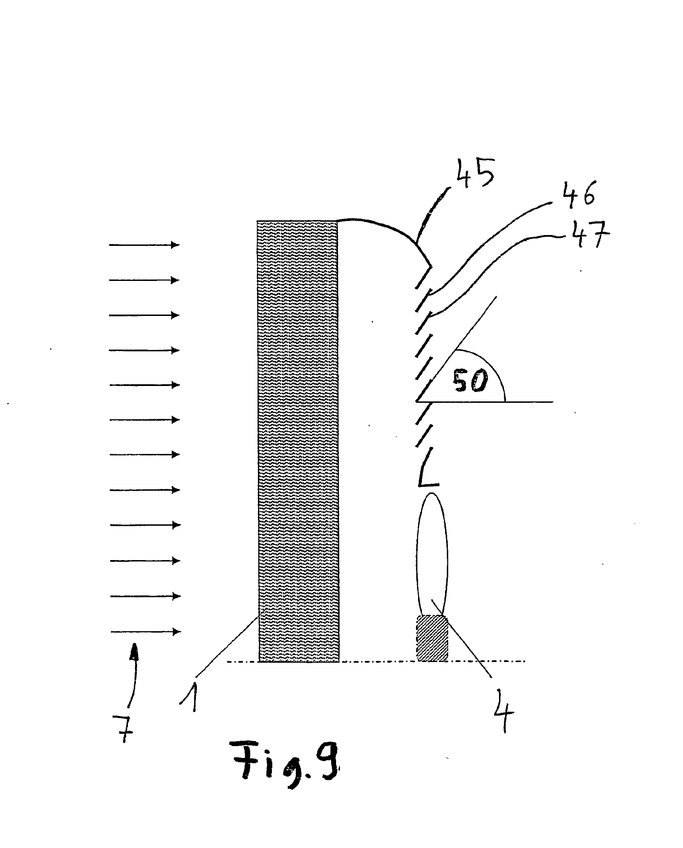

In Figur 9 ist dargestellt, dass eine Lüfterhaube 45 eine radial außerhalb des Lüfters 4 angeordnete Öffnung aufweist, in der eine Vielzahl von Leitlamellen 46, 47 gleichmäßig voneinander beabstandet sind. Die Leitlamellen 46, 47 sind in einem Winkel 45 von etwa 55° zu der Hauptströmungsrichtung der Kühlluftströmung 7 angeordnet.

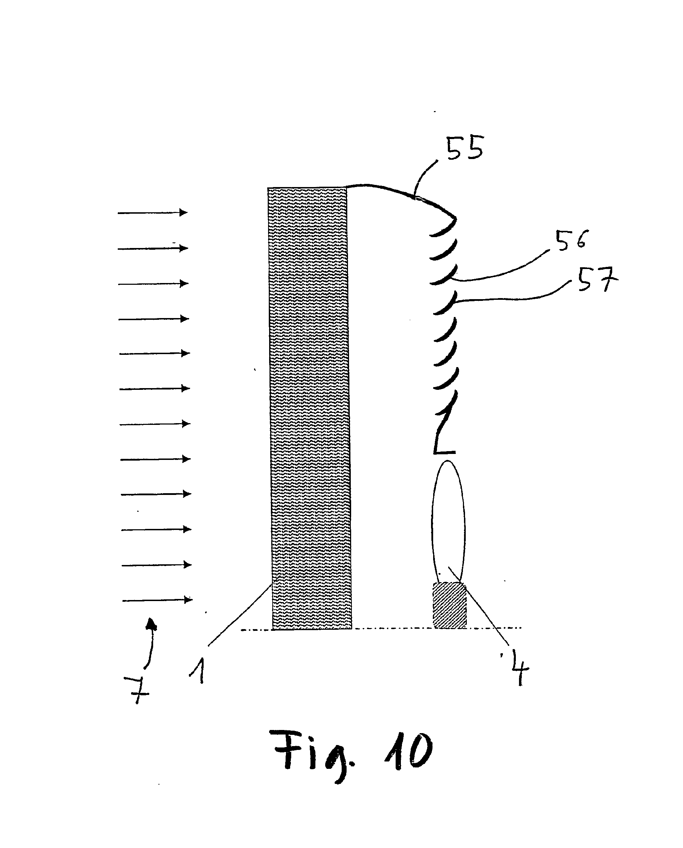

In Figur 10 ist ein ähnliches Kühlsystem wie in Figur 9 dargestellt. Allerdings sind bei dem in Figur 10 dargestellten Ausführungsbeispiel in einer Lüfterhaube 55 eine Vielzahl von gekrümmten Leitlamellen 56, 57 vorgesehen. Die Leitlamellen 55, 56 sind zum Lüfter 4 hin gewölbt. Dadurch ergibt sich, insbesondere im Staudruckbetrieb, ein günstiger Strömungsverlauf.

## Patentansprüche

1. Kühlsystem für ein Kraftfahrzeug, mit einem Kühler (1), der von Kühlmittel durchflossen wird, das insbesondere zur Kühlung eines Motors (2) dient, und der von einer Kühlluftströmung (7) durchströmt wird, die, in Abhängigkeit von der Geschwindigkeit des Kraftfahrzeugs, von einem Lüfter (4) beeinflusst wird, der zwischen dem Kühler (1) und dem Motor (2) angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube (6;15;25;35;45;55) abgedeckt ist, **dadurch gekennzeichnet, dass** die Lüfterhaube (25) an mindestens einer Seite des Differenzbereichs mit mindestens einer Öffnung (27) versehen ist, wobei sich die Öffnung (27), im Schnitt betrachtet, nach außen zum Motor (2) hin erweitert.

2. Kühlsystem für ein Kraftfahrzeug, mit einem Kühler (1), der von Kühlmittel durchflossen wird, das insbesondere zur Kühlung eines Motors (2) dient, und der von einer Kühlluftströmung (7) durchströmt wird, die, in Abhängigkeit von der Geschwindigkeit des Kraftfahrzeugs, von einem Lüfter (4) beeinflusst wird, der zwischen dem Kühler (1) und dem Motor (2) angeordnet ist, wobei die Projektion der Lüfterfläche auf die Kühlerfläche um einen Differenzbereich kleiner als die Kühlerfläche ist und der Differenzbereich der Kühlerfläche durch eine Lüfterhaube (6; 15;25;35;45;55) abgedeckt ist, **dadurch gekennzeichnet, dass** die Lüfterhaube (45) in dem Differenzbereich zum Motor hin mindestens eine Öffnung aufweist, in der mehrere Leitlamellen, angeordnet sind, wobei mehrere Leitlamellen (45,46) in Form eines Leitgitters im Wesentlichen parallel zueinander angeordnet sind und wobei die Leitlamellen (45,46), in der Draufsicht auf den Kühler betrachtet, im Wesentlichen konzentrisch zu der Lüfterachse angeordnet sind.

3. Kühlsystem nach Anspruch 2, **dadurch gekennzeichnet, dass** die Leitlamellen (45,46) in einem Winkel von 30° bis 80°, insbesondere von etwa 45°, zur Kühlluftströmung (7) geneigt angeordnet sind.

4. Kühlsystem nach einem der Ansprüche 2 bis 3, **dadurch gekennzeichnet, dass** die Leitlamellen (55,56), im Schnitt betrachtet, gekrümmt ausgebildet sind.

5. Kühlsystem nach Anspruch 4, **dadurch gekennzeichnet; dass** die Leitlamellen (55,56) zum Lüfter hin konvex gekrümmt sind.

6. Kühlsystem nach einem der Ansprüche 2 bis 3, **dadurch gekennzeichnet, dass** die Leitlamellen profiliert ausgebildet sind.

7. Kühlsystem nach einem der vorhergehenden Ansprüche, **dadurch gekennzeichnet, dass** die Lüfterhaube (6;15;25;35;45;55) einstückig aus Kunststoff gebildet ist.

## Claims

1. A coaling system for a motor vehicle, having a radiator (1) through which a coolant flows, said coolant swerving, in particular, for cooling an engine (2), and through which flows a cooling air stream (7) which is influenced, as a function of the speed of the motor vehicle, by a fan (4) which is arranged between the radiator (1) and the engine (2), the projection of the fan surface onto the radiator surface bring smaller, by a differential area, than the radiator surface and the differential area of the radiator surface being covered by a fan cowling (6; 15; 25; 35; 45; 55), **characterized in that** the fan cowling (25) is provided with at least one opening (27) on at least one side of the differential area, wherein the opening (27) extends outwardly toward the engine (2), as viewed in cross section.

2. A cooling system for a motor vehicle, having a radiator (1) through which a coolant flows, said coolant serving, in particular, for cooling an engine (2), and through which flows a cooling air stream (7) which is influenced, as a function of the speed of the motor vehicle, by a fan (4) which is arranged between the radiator (1) and the engine (2), the projection of the fan surface onto the radiator surface being smaller, by a differential area, than the radiator surface and the differential area of the radiator surface being covered by a fan cowling (6; 15; 25; 35; 45; 55), **characterized in that** the fan cowling (45) has at least one opening in the differential area toward the engine, in which opening a plurality of guide lamellas, are arranged, wherein a plurality of guide lamellas (45, 46) are arranged essentially parallel to one another in the form of a guiding grill and wherein the guide lamellas (45, 46) are arranged essentially concentrically to the fan axis considered in the plan view onto the radiator.

3. The cooling system as claimed in claim 2, **characterized in that** the guide lamellas (45, 46) are arranged inclined at an angle of 30° to 80°, in particular of approximately 45°, with respect to the cooling air stream (7).

4. The cooling system as claimed in one of claims 2 to 3, **characterized in that** the guide lamellas (55, 56) are of bent design, viewed in section.

5. The cooling system as claimed in claim 4, **characterized in that** the guide lamellas (55, 56) are convexly curved towards the fan.

6. The cooling system as claimed in one of claims 2 to 3, **characterized in that** the guide lamellas are of contoured design.

7. The cooling system as claimed in one of the preceding claims, **characterized in that** the fan cowling (6; 15; 25; 35; 45; 55) is formed in one pierce from plastic.

## Revendications

1. Système de refroidissement pour un véhicule automobile, comprenant un radiateur (1) qui est traversé par un liquide de refroidissement qui sert en particulier au refroidissement d un moteur (2), lequel radiateur est traversé par un fluc d air de refroidissement (7) qui en fonction de la vitesse du véhicule automobile est influencé par un ventilateur (4) qui est disposé entre le radiateur (1) et le moteur (2) où la projection de la surface du ventilateur, sur la surface du radiateur, est inférieure, d'une zone de différence, a la surface du radiateur et la zone de différence de la surface du radiateur est recouverte par un capotage de ventilateur (6 15 25; 35 45 55) **caractérisé en ce que** le capotage de ventilateur (25) sur au moins un côté de la zone de différence est dote d au moins une ouverture (27) ou l'ouverture (27) vue en coupe, s'élargit vers l'extérieur en direction du moteur (2)

2. Système de refroidissement pour un véhicule automobile comprenant un radiateur (1) qui est traversé par un liquide de refroidissement qui sert en particulier au refroidissement d'un moteur (2) lequel radiateur est traversé par un flux d'air de refroidissement (7) qui en fonction de la vitesse du véhicule automobile est influencé par un ventilateur (4) qui est disposé entre le radiateur (1) et le moteur (2) ou la protection de la surface du ventilateur sur la surface du radiateur, est inférieure, d'une zone de différence, à la surface du radiateur et la zone de différence de la surface du radiateur est recouverte par un capotage de ventilateur (6 15 25 35 45 55) **caractérisé en ce que** le capotage de ventilateur (45) présente, dans la zone de différence, au moins une ouverture en direction du moteur, ouverture dans laquelle sont disposées plusieurs lamelles deflectrices, où plusieurs lamelles déflectrices (45 46) se préesentant sous la forme d'une grille déflectrice sont disposées en étant pratiquement parallèles entre elles et où les lamelles déflectrices (45 46) considérées dans la vue de dessus sur le radiateur, sont disposées de façon pratiquement concentrique par rapport à l'axe du ventilateur.

3. Système de refroidissement selon la revendication 2 **caractérisé en ce que** les lamelles déflectrices (45 46) sont disposées de façon inclinée par rapport au flux d'air de refroidissement (7) suivant un angle allant de 30° à 80°, en particulier à peu près égal a 45°

4. Système de refroidissement selon 1 une des revendications 2 ou 3 **caractérisé en ce que** les lamelles déflectrices (55 56), vues en coupe sont configurées de façon incurvée.

5. Système de refroidissement selon la revendication 4 **caractérisé en ce que** les lamelles deflectrices (55, 56) sont incurvées de façon convexe en direction du ventilateur.

6. Système de refroidissement selon l'une des revendications 2 ou 3 **caractérisé en ce que** les lamelles déflectrices sont configurées de facon profilée.

7. Système de refroidissement selon l'une quelconque des revendications précédentes, **caractérisé en ce que** le capotage de ventilateur (6; 15; 25; 35; 45; 55) est formé par une seule et même pièce en matière plastique.
